# EUROPEAN PATENT APPLICATION

(11) **EP 4 818 344 A1**
(43) Date of publication of application: **07.10.2026**
(21) Application number: 23959983.0
(22) Date of filing: 04.12.2023
(51) Int. Cl.: C22C 21/00, C22C 1/04, B22F 1/00, B22F 9/08, B33Y 70/00

(54) **ALUMINUM ALLOY POWDER FOR ADDITIVE MANUFACTURING AND PREPARATION METHOD THEREFOR, AND ALUMINUM ALLOY PART**

(30) Priority: 29.11.2023 CN 202311613681
(71) Applicant: Xi'an Bright Laser Technologies Co., Ltd., Xi'an, Shaanxi 710000 (CN)
(72) Inventor: ZHAO, Cheng, Shaanxi 710000 (CN); ZHAO, Wei, Shaanxi 710000 (CN); XUE, Lei, Shaanxi 710000 (CN)
(74) Representative: Murgitroyd & Company
(86) International application number: PCT/CN2023/136131
(87) International publication number: WO 2025/112077

(57) **Abstract**

An aluminum alloy powder for additive manufacturing includes, in percentages by mass: Si: 0.1% to 2.0%; Fe: 0.1% to 1.0%; Cu: 0.1% to 1.0%; Mn: 0.01% to 1.5%; Mg: 0.1% to 1.5%; Cr: 0.01% to 0.5%; Zn: 0.1% to 0.5%; a first component: 0.8% to 3.0%, wherein the first component is Ti, Zr, or a combination of Ti and Zr; a second component: less than 0.05%, wherein the second component is a combination of O and N; and the balance being Al and inevitable impurities.

## Description

### BACKGROUND OF THE INVENTION

### FIELD OF THE INVENTION

The present application relates to the technical field of metal materials, and in particular to an aluminum alloy powder for additive manufacturing, a preparation method thereof, and an aluminum alloy part.

### DESCRIPTION OF THE RELATED ART

With continuous development of material manufacturing technologies, additive manufacturing technologies, in particular a selective laser melting (SLM) technology, have become new processing technologies for manufacturing aluminum alloy parts by virtue of advantages such as a highly flexible design, a simple processing procedure, and integration of structure and function.

At present, there are only a few types of existing aluminum alloy powders that can be used for additive manufacturing, and most of them are Al-Si system aluminum alloy powders having near-eutectic compositions (for example, AlSi10Mg) or Al-Mg-Sc-Zr aluminum alloy powders. However, for a 6XXX-series aluminum alloy (for example, a 6061 aluminum alloy), although the 6XXX-series aluminum alloy has advantages such as relatively high machinability, excellent weldability, good corrosion resistance, a low tendency to deform after processing, and ease of polishing and coloring, the 6XXX-series aluminum alloy has a very high hot cracking tendency, which causes it to be impossible to manufacture crack-free aluminum alloy parts by an additive manufacturing technology, thereby limiting further popularization and application of the 6XXX-series aluminum alloy powder.

### SUMMARY OF THE INVENTION

Embodiments of the present application provide an aluminum alloy powder for additive manufacturing, a preparation method thereof, and an aluminum alloy part, which can reduce or eliminate cracking that tends to occur in an aluminum alloy part during additive manufacturing when an existing 6XXX-series aluminum alloy powder is used, and can improve mechanical properties of an aluminum alloy part obtained by additive manufacturing.

Technical solutions of the embodiments of the present application are as follows.

In a first aspect, the embodiments of the present application provide an aluminum alloy powder for additive manufacturing. In percentages by mass, the aluminum alloy powder comprises:
Si: 0.1% to 2.0%;
Fe: 0.1% to 1.0%;
Cu: 0.1% to 1.0%;
Mn: 0.01% to 1.5%;
Mg: 0.1% to 1.5%;
Cr: 0.01% to 0.5%;
Zn: 0.1% to 0.5%;
a first component: 0.8% to 3.0%, wherein the first component is Ti, Zr, or a combination of Ti and Zr;
a second component: less than 0.05%, wherein the second component is a combination of O and N; and
the balance being Al and inevitable impurities.

In some examples, the first component is greater than or equal to 0.8% and less than 2.0%.

In some examples, the first component is greater than 2.0% and less than or equal to 3.0%.

In some examples, in percentages by mass, the aluminum alloy powder comprises at least one of the following:
Si: 0.6% to 0.8%;
Fe: 0.6% to 0.8%;
Cu: 0.2% to 0.4%;
Mn: 0.1% to 0.2%;
Mg: 0.8% to 1.2%;
Cr: 0.2% to 0.3%;
Zn: 0.2% to 0.3%.

In some examples, a particle size of the aluminum alloy powder is less than 180 µm.

In some examples, the particle size of the aluminum alloy powder is 20 µm to 63 µm.

In a second aspect, the embodiments of the present application provide a preparation method of an aluminum alloy powder for additive manufacturing. The preparation method comprises:
uniformly melting metal raw materials in a set ratio, wherein, in percentages by mass, the metal raw materials in the set ratio comprise:
Si: 0.1% to 2.0%;
Fe: 0.1% to 1.0%;
Cu: 0.1% to 1.0%;
Mn: 0.01% to 1.5%;
Mg: 0.1% to 1.5%;
Cr: 0.01% to 0.5%;
Zn: 0.1% to 0.5%;
a first component: 0.8% to 3.0%, wherein the first component is Ti, Zr, or a combination of Ti and Zr;
a second component: less than 0.05%, wherein the second component is a combination of O and N;
the balance being Al and inevitable impurities; and
preparing, based on the uniformly melted metal raw materials, an aluminum alloy powder by a gas atomization method, wherein a sphericity of the aluminum alloy powder is not less than 0.8, and a hollow-powder ratio of the aluminum alloy powder is not greater than 10%.

In some examples, the first component is greater than or equal to 0.8% and less than 2.0%.

In some examples, the first component is greater than 2.0% and less than or equal to 3.0%.

In some examples, in percentages by mass, the metal raw materials in the set ratio comprise at least one of the following:
Si: 0.6% to 0.8%;
Fe: 0.6% to 0.8%;
Cu: 0.2% to 0.4%;
Mn: 0.1% to 0.2%;
Mg: 0.8% to 1.2%;
Cr: 0.2% to 0.3%;
Zn: 0.2% to 0.3%.

In a third aspect, the embodiments of the present application provide an aluminum alloy part. The aluminum alloy part is obtained by additive manufacturing from the aluminum alloy powder according to the first aspect.

In some examples, after heat treatment, the aluminum alloy part has a tensile strength of not less than 316 MPa, a yield strength of not less than 293 MPa, and an elongation after fracture of not less than 17%, wherein a heat treatment process for the aluminum alloy part includes holding the aluminum alloy part at 150°C to 180°C for 8 hours to 12 hours and then cooling the aluminum alloy part in air.

In some examples, after heat treatment, the aluminum alloy part has a tensile strength of 316 MPa to 370 MPa, a yield strength of 293 MPa to 347 MPa, and an elongation after fracture of 17% to 22%.

The embodiments of the present application provide an aluminum alloy powder for additive manufacturing, a preparation method thereof, and an aluminum alloy part. The aluminum alloy powder is obtained by adding Ti and/or Zr to an existing 6XXX-series aluminum alloy powder, so that, during additive manufacturing, Ti and/or Zr forms an Al₃Ti phase and/or an Al₃Zr phase with Al. During solidification, the Al₃Ti phase and/or the Al₃Zr phase can serve as heterogeneous nucleation sites of α-Al to refine grains, so that coarse columnar crystals inside a molten pool are transformed into fine equiaxed crystals, thereby eliminating hot cracks generated during solidification and solving the problem that an existing 6XXX-series aluminum alloy powder is prone to hot cracking during an additive manufacturing process.

### BRIEF DESCRIPTION OF THE DRAWINGS

In order to more clearly illustrate the technical solutions of the embodiments of the present application, the drawings used in the description of the embodiments will be briefly introduced below. The drawings described below are merely exemplary embodiments of the present application.
FIG. 1 is an optical micrograph of a metallographic microstructure of an as-built aluminum alloy part manufactured from an existing 6XXX-series aluminum alloy powder using SLM technology at 100× magnification.
FIG. 2 is an optical micrograph of a metallographic microstructure of an as-built aluminum alloy part manufactured from an existing 6XXX-series aluminum alloy powder using SLM technology at 200× magnification.
FIG. 3 is an optical micrograph of metallographic microstructures of as-built aluminum alloy parts manufactured from the aluminum alloy powders provided in Examples 1 to 3 of the present application using SLM technology at 100× magnification.
FIG. 4 is an optical micrograph of metallographic microstructures of as-built aluminum alloy parts manufactured from the aluminum alloy powders provided in Examples 1 to 3 of the present application using SLM technology at 200× magnification.
FIG. 5 is an optical micrograph of metallographic microstructures of as-built aluminum alloy parts manufactured from the aluminum alloy powders provided in Comparative Examples 1 to 3 of the present application using SLM technology at 100× magnification.
FIG. 6 is an optical micrograph of metallographic microstructures of as-built aluminum alloy parts manufactured from the aluminum alloy powders provided in Comparative Examples 1 to 3 of the present application using SLM technology at 200× magnification.

### DETAILED DESCRIPTION

In order to make the objects, technical solutions and advantages of the present application more apparent, exemplary embodiments according to the present application will be described in detail below with reference to the drawings. Apparently, the described embodiments are merely a part of embodiments of the present application, rather than all embodiments of the present application. It should be understood that the present application is not limited by the exemplary embodiments described herein.

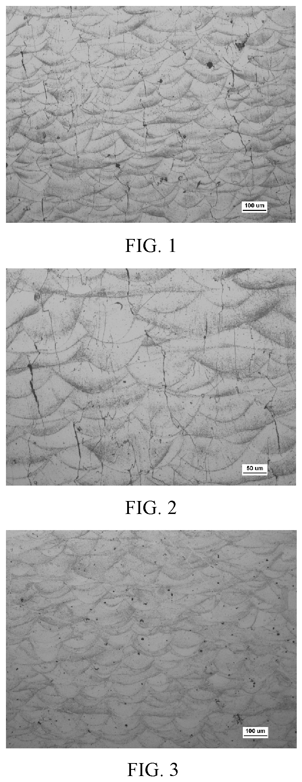

Referring to FIG. 1, it shows an optical micrograph of a metallographic microstructure of an as-built aluminum alloy part manufactured from an existing 6XXX-series aluminum alloy powder using SLM technology at 100× magnification. Referring to FIG. 2, it shows an optical micrograph of a metallographic microstructure of an as-built aluminum alloy part manufactured from an existing 6XXX-series aluminum alloy powder using SLM technology at 200× magnification. As shown in FIG. 1 and FIG. 2, a large number of hot cracks are present in the metallographic microstructure of the as-built aluminum alloy part manufactured from the existing 6XXX-series aluminum alloy powder using the SLM technology, and some hot cracks pass through a plurality of molten pools. As measured, some hot cracks have a length of about hundreds of micrometers. These hot cracks seriously affect the mechanical properties of the aluminum alloy part, and further limit application of the aluminum alloy part in technical fields such as automobiles and aerospace.

Based on the above description, embodiments of the present application provide an aluminum alloy powder for additive manufacturing. The aluminum alloy powder is obtained by adding Ti and/or Zr to an existing 6XXX-series aluminum alloy powder, so as to eliminate hot cracks in an aluminum alloy part manufactured by additive manufacturing, and further improve mechanical properties of the aluminum alloy part obtained by additive manufacturing. In percentages by mass, components and contents of the aluminum alloy powder provided in the embodiments of the present application are specifically as follows:
Si: 0.1% to 2.0%;
Fe: 0.1% to 1.0%;
Cu: 0.1% to 1.0%;
Mn: 0.01% to 1.5%;
Mg: 0.1% to 1.5%;
Cr: 0.01% to 0.5%;
Zn: 0.1% to 0.5%;
a first component: 0.8% to 3.0%, wherein the first component is Ti, Zr, or a combination of Ti and Zr;
a second component: less than 0.05%, wherein the second component is a combination of O and N; and
the balance being Al and inevitable impurities.

In some examples, among the inevitable impurities described above, a content of each impurity is less than 0.05%.

In some examples, the first component is greater than or equal to 0.8% and less than 2.0%.

In some examples, the first component is greater than 2.0% and less than or equal to 3.0%.

In some examples, in percentages by mass, the aluminum alloy powder comprises at least one of the following:
Si: 0.6% to 0.8%;
Fe: 0.6% to 0.8%;
Cu: 0.2% to 0.4%;
Mn: 0.1% to 0.2%;
Mg: 0.8% to 1.2%;
Cr: 0.2% to 0.3%;
Zn: 0.2% to 0.3%.

In the embodiments of the present application, Ti and Zr can be separately added to the existing 6XXX-series aluminum alloy powder. When Ti is separately added to the existing 6XXX-series aluminum alloy powder, a content of Ti is 0.8% to 3.0% in percentages by mass. When Zr is separately added to the existing 6XXX-series aluminum alloy powder, a content of Zr is 0.8% to 3.0% in percentages by mass. In some examples, both Ti and Zr may also be added to the existing 6XXX-series aluminum alloy powder. When both Ti and Zr are added to the existing 6XXX-series aluminum alloy powder, a total content of Ti and Zr is 0.8% to 3.0%.

In a specific implementation process, after metal raw materials in a set ratio are sufficiently and uniformly melted, the aluminum alloy powder for additive manufacturing provided in the embodiments of the present application is prepared using a gas atomization method or another powder preparation technology. In some examples, the aluminum alloy powder has a sphericity of not less than 0.8, and the aluminum alloy powder has a hollow-powder ratio of not greater than 10%.

In some examples, the aluminum alloy powder is stored in a vacuum-sealed manner, and is subjected to drying treatment before additive manufacturing. The drying treatment includes holding the aluminum alloy powder at 100°C to 150°C for 2 hours, and both the drying treatment and cooling treatment after the drying treatment are performed in an argon protective atmosphere.

In some examples, the aluminum alloy powder has a particle size of less than 180 µm. Optionally, the aluminum alloy powder has a particle size of 20 µm to 63 µm.

In some other examples, when the aluminum alloy powder is subjected to additive manufacturing using selective laser melting technology, the aluminum alloy powder is added into a powder feeding bin in additive manufacturing equipment, and when an oxygen content in a forming chamber of the additive manufacturing equipment drops below 0.02%, a laser starts to scan the aluminum alloy powder, supplied by the powder feeding bin, on a substrate and layer-by-layer stacking is performed to finally form an aluminum alloy part. Optionally, the process of starting laser scanning of the aluminum alloy powder, supplied by the powder feeding bin, on the substrate and performing layer-by-layer stacking may be implemented by a selective laser melting method. Specifically, when the oxygen content in the forming chamber drops below 0.02%, one layer of the aluminum alloy powder supplied by the powder feeding bin is spread on a surface of the substrate, and the laser scans the aluminum alloy powder on the surface of the substrate to form a first selective laser melting layer. After the first selective laser melting layer is solidified, the substrate is lowered. One layer of the aluminum alloy powder supplied by the powder feeding bin is spread on an upper surface of the solidified first selective laser melting layer, and the laser scans the aluminum alloy powder on the upper surface of the first selective laser melting layer to form a second selective laser melting layer. Layer-by-layer stacking is repeated until an aluminum alloy part is manufactured.

It may be understood that, in the embodiments of the present application, by adjusting components of the existing 6XXX-series aluminum alloy powder, specifically by adding Ti and/or Zr to the existing 6XXX-series aluminum alloy powder, Ti and/or Zr forms an Al₃Ti phase and/or an Al₃Zr phase with Al during additive manufacturing. During solidification, the Al₃Ti phase and/or the Al₃Zr phase can serve as heterogeneous nucleation sites of α-Al to refine grains, so that coarse columnar crystals inside a molten pool are transformed into fine equiaxed crystals, thereby eliminating hot cracks generated during solidification and solving the problem that the existing 6XXX-series aluminum alloy powder is prone to hot cracking during an additive manufacturing process.

### Example 1

This example provides an aluminum alloy powder for additive manufacturing. The aluminum alloy powder is obtained by adding Ti and Zr to an existing 6XXX-series aluminum alloy powder. Specifically, in percentages by mass, components and contents of the aluminum alloy powder provided in Example 1 are as follows: Si: 0.1%, 0.6%, 0.7%, 0.8% or 2.0%; Fe: 0.1%, 0.6%, 0.7%, 0.8% or 1.0%; Cu: 0.1%, 0.2%, 0.3%, 0.4% or 1.0%; Mn: 0.01%, 0.1%, 0.15%, 0.2%, 0.7% or 1.5%; Mg: 0.1%, 0.8%, 1.0%, 1.2% or 1.5%; Cr: 0.01%, 0.2%, 0.25%, 0.3% or 0.5%; Zn: 0.1%, 0.2%, 0.25%, 0.3% or 0.5%; Ti: 0.2%, 0.55%, 0.8% or 0.9%; Zr: 0.6%, 0.65%, 0.7% or 1.0%; O: 0.032% or 0.041%; N: 0.004% or 0.005%; and the balance is Al and inevitable impurities.

In some examples, after the metal raw materials in the set ratio are sufficiently and uniformly melted, the aluminum alloy powder for additive manufacturing provided in Example 1 is prepared by a nitrogen gas atomization method. The aluminum alloy powder provided in Example 1 has a sphericity of 0.85, and the hollow-powder ratio of the aluminum alloy powder is 0.4%.

For Example 1 described above, the aluminum alloy powder provided in Example 1 needs to be stored in a vacuum-sealed manner, and be subjected to drying treatment before additive manufacturing. The drying treatment includes holding the aluminum alloy powder at 120°C for 2 hours, and both the drying treatment and cooling treatment after the drying treatment are performed in an argon protective atmosphere. It should be noted that, after the aluminum alloy powder is subjected to the drying treatment and the cooling treatment, particle-size sieving needs to be performed, so that the aluminum alloy powder has a particle size of 20 µm to 180 µm.

The aluminum alloy powder provided in Example 1 is subjected to additive manufacturing by a selective laser melting method to obtain an aluminum alloy part, and the aluminum alloy part is subjected to heat treatment. A specific process of the heat treatment includes holding the aluminum alloy part at 150°C for 8 hours and then cooling the aluminum alloy part in air.

In some examples, the additive manufacturing process using the aluminum alloy powder provided in Example 1 may be completed using additive manufacturing equipment, such as BLT-S310, BLT-S320, BLT-S400 and BLT-S600.

### Example 2

Ti and Zr in Example 1 are replaced with Zr, and in percentages by mass, Zr: 0.8%, 1.2%, 1.5% or 1.9%.

The particle size of 20 µm to 180 µm of the aluminum alloy powder in Example 1 is adjusted to 20 µm to 63 µm.

The aluminum alloy powder in Example 2 is subjected to additive manufacturing by a selective laser melting method to obtain an aluminum alloy part, and the aluminum alloy part is subjected to heat treatment. A specific process of the heat treatment includes holding the aluminum alloy part at 180°C for 12 hours and then cooling the aluminum alloy part in air.

Except as otherwise described, the remaining technical features are the same as those in Example 1.

### Example 3

Ti and Zr in Example 1 are replaced with Ti, and in percentages by mass, Ti: 0.8%, 1.2%, 1.5% or 1.9%.

The particle size of 20 µm to 180 µm of the aluminum alloy powder in Example 1 is adjusted to 20 µm to 63 µm.

The aluminum alloy powder in Example 3 is subjected to additive manufacturing by a selective laser melting method to obtain an aluminum alloy part, and the aluminum alloy part is subjected to heat treatment. A specific process of the heat treatment includes holding the aluminum alloy part at 160°C for 10 hours and then cooling the aluminum alloy part in air.

Except as otherwise described, the remaining technical features are the same as those in Example 1.

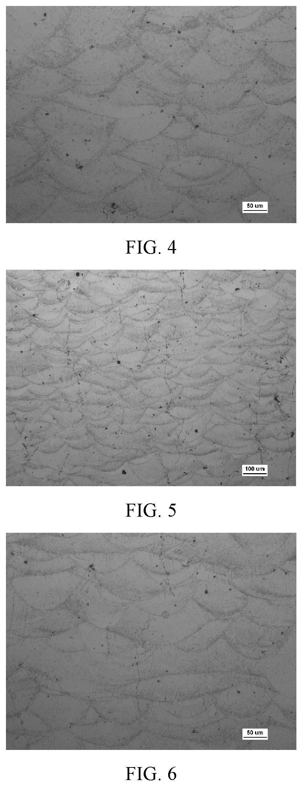

Specimens of the above as-built aluminum alloy parts obtained by additive manufacturing in Examples 1 to 3 are observed by an optical microscope, and the metallographic microstructures are as shown in FIG. 3 and FIG. 4. FIG. 3 is an optical micrograph of metallographic microstructures of the as-built aluminum alloy parts obtained by additive manufacturing in Examples 1 to 3 at 100× magnification. FIG. 4 is an optical micrograph of metallographic microstructures of the as-built aluminum alloy parts obtained by additive manufacturing in Examples 1 to 3 at 200× magnification. It can be seen from FIG. 3 and FIG. 4 that there are no hot cracks in the metallographic microstructures of the aluminum alloy parts obtained by additive manufacturing in Examples 1 to 3, and the metallographic microstructures are dense and uniform.

Mechanical property tests are performed on transverse specimens corresponding to the heat-treated aluminum alloy parts in Examples 1 to 3. The mechanical properties of the transverse specimens are used to characterize the mechanical properties of the heat-treated aluminum alloy parts. When the heat-treated aluminum alloy part has a lower limit of tensile strength of 320 MPa, a median of tensile strength of 332 MPa, and an upper limit of tensile strength of 345 MPa, the remaining mechanical property parameters of the heat-treated aluminum alloy part are shown in Table 1.

**Table 1**

| Mechanical property test temperature | Tensile strength Rm (MPa) | Yield strength Rp0.2 (MPa) | Elongation after fracture A (%) | Reduction of area after fracture Z (%) |
|---|---|---|---|---|
| Room temperature | 320 | 293 | 22 | 57 |
| Room temperature | 332 | 314 | 20 | 55 |
| Room temperature | 345 | 325 | 20 | 49 |

In some examples, the transverse specimen described above refers to a specimen sampled along a transverse direction of the aluminum alloy part when the above mechanical property test is performed on the aluminum alloy part. The transverse direction of the aluminum alloy part refers to an X-Y direction, wherein the X direction refers to a length direction of a substrate in a forming chamber of additive manufacturing equipment, and the Y direction refers to a width direction of the substrate.

### Example 4

This example provides an aluminum alloy powder for additive manufacturing. The aluminum alloy powder is obtained by adding Ti and Zr to an existing 6XXX-series aluminum alloy powder. Specifically, in percentages by mass, components and contents of the aluminum alloy powder provided in Example 4 are as follows: Si: 0.1%, 0.6%, 0.7%, 0.8% or 2.0%; Fe: 0.1%, 0.6%, 0.7%, 0.8% or 1.0%; Cu: 0.1%, 0.2%, 0.3%, 0.4% or 1.0%; Mn: 0.01%, 0.1%, 0.15%, 0.2%, 0.7% or 1.5%; Mg: 0.1%, 0.8%, 1.0%, 1.2% or 1.5%; Cr: 0.01%, 0.2%, 0.25%, 0.3% or 0.5%; Zn: 0.1%, 0.2%, 0.25%, 0.3% or 0.5%; Ti: 1.0%, 1.25% or 1.5%; Zr: 1.2%, 1.25% or 1.3%; O: 0.025% or 0.038%; N: 0.004% or 0.005%; and the balance is Al and inevitable impurities.

In a specific implementation process, after the metal raw materials in the set ratio are sufficiently and uniformly melted, the aluminum alloy powder for additive manufacturing provided in Example 4 is prepared by a nitrogen gas atomization method. The aluminum alloy powder provided in Example 4 has a sphericity of 0.84, and the hollow-powder ratio of the aluminum alloy powder is 0.35%.

For Example 4 described above, the aluminum alloy powder provided in Example 4 needs to be stored in a vacuum-sealed manner, and be subjected to drying treatment before additive manufacturing. The drying treatment includes holding the aluminum alloy powder at 120°C for 2 hours, and both the drying treatment and cooling treatment after the drying treatment are performed in an argon protective atmosphere. It should be noted that, after the aluminum alloy powder is subjected to the drying treatment and the cooling treatment, particle-size sieving needs to be performed, so that the aluminum alloy powder has a particle size of 20 µm to 180 µm.

The aluminum alloy powder provided in Example 4 is subjected to additive manufacturing by a selective laser melting method to obtain an aluminum alloy part, and the aluminum alloy part is subjected to heat treatment. A specific process of the heat treatment includes holding the aluminum alloy part at 150°C for 8 hours and then cooling the aluminum alloy part in air.

In some examples, the additive manufacturing process using the aluminum alloy powder provided in Example 4 may be completed using additive manufacturing equipment, such as BLT-S310, BLT-S320, BLT-S400 and BLT-S600.

### Example 5

Ti and Zr in Example 4 are replaced with Zr, and in percentages by mass, Zr: 2.2%, 2.5% or 2.8%.

The particle size of 20 µm to 180 µm of the aluminum alloy powder in Example 4 is adjusted to 20 µm to 63 µm.

The aluminum alloy powder described in Example 5 is subjected to additive manufacturing by a selective laser melting method to obtain an aluminum alloy part, and the aluminum alloy part is subjected to heat treatment. A specific process of the heat treatment includes holding the aluminum alloy part at 180°C for 12 hours and then cooling the aluminum alloy part in air.

Except as otherwise described, the remaining technical features are the same as those in Example 4.

### Example 6

Ti and Zr in Example 4 are replaced with Ti, and in percentages by mass, Ti: 2.2%, 2.5% or 2.8%.

The particle size of 20 µm to 180 µm of the aluminum alloy powder in Example 4 is adjusted to 20 µm to 63 µm.

The aluminum alloy powder described in Example 6 is subjected to additive manufacturing by a selective laser melting method to obtain an aluminum alloy part, and the aluminum alloy part is subjected to heat treatment. A specific process of the heat treatment includes holding the aluminum alloy part at 160°C for 10 hours and then cooling the aluminum alloy part in air.

Except as otherwise described, the remaining technical features are the same as those in Example 4.

Mechanical property tests are performed on transverse specimens corresponding to the heat-treated aluminum alloy parts in Examples 4 to 6. The mechanical properties of the transverse specimens are used to characterize the mechanical properties of the heat-treated aluminum alloy parts. When the heat-treated aluminum alloy part has a lower limit of tensile strength of 350 MPa, a median of tensile strength of 361 MPa, and an upper limit of tensile strength of 370 MPa, the remaining mechanical property parameters of the heat-treated aluminum alloy part are shown in Table 2.

**Table 2**

| Mechanical property test temperature | Tensile strength Rm (MPa) | Yield strength Rp0.2 (MPa) | Elongation after fracture A (%) | Reduction of area after fracture Z (%) |
|---|---|---|---|---|
| Room temperature | 350 | 328 | 18.5 | 43 |
| Room temperature | 361 | 336 | 18 | 40 |
| Room temperature | 370 | 347 | 17 | 48 |

In some examples, the transverse specimen described above refers to a specimen sampled along a transverse direction of the aluminum alloy part when the above mechanical property test is performed on the aluminum alloy part. The transverse direction of the aluminum alloy part refers to an X-Y direction, wherein the X direction refers to a length direction of a substrate in a forming chamber of additive manufacturing equipment, and the Y direction refers to a width direction of the substrate.

It can be seen from Table 2 that, with an increase in a content of Ti or Zr, or an increase in a total content of Ti and Zr, after heat treatment, aluminum alloy parts obtained by additive manufacturing from the aluminum alloy powders provided in Examples 4 to 6 have a tensile strength of not less than 344 MPa, a yield strength of not less than 314 MPa, and an elongation after fracture of not less than 16.5%.

### Comparative Example 1

This comparative example provides an aluminum alloy powder for additive manufacturing. The aluminum alloy powder is obtained by adding Ti and Zr to an existing 6XXX-series aluminum alloy powder. Components and contents of the aluminum alloy powder provided in Comparative Example 1 are as follows: Si: 0.1%, 0.6%, 0.7%, 0.8% or 2.0%; Fe: 0.1%, 0.6%, 0.7%, 0.8% or 1.0%; Cu: 0.1%, 0.2%, 0.3%, 0.4% or 1.0%; Mn: 0.01%, 0.1%, 0.15%, 0.2%, 0.7% or 1.5%; Mg: 0.1%, 0.8%, 1.0%, 1.2% or 1.5%; Cr: 0.01%, 0.2%, 0.25%, 0.3% or 0.5%; Zn: 0.1%, 0.2%, 0.25%, 0.3% or 0.5%; Ti: 0.1%, 0.2% or 0.3%; Zr: 0.1%, 0.2% or 0.3%; O: 0.022% or 0.041%; N: 0.002% or 0.004%; and the balance is Al and inevitable impurities.

In some examples, after the metal raw materials in the set ratio are sufficiently and uniformly melted, the aluminum alloy powder for additive manufacturing provided in Comparative Example 1 is prepared by a nitrogen gas atomization method. The aluminum alloy powder provided in Comparative Example 1 has a sphericity of 0.88, and the hollow-powder ratio of the aluminum alloy powder is 0.5%.

For Comparative Example 1 described above, the aluminum alloy powder provided in Comparative Example 1 needs to be stored in a vacuum-sealed manner, and be subjected to drying treatment before additive manufacturing. The drying treatment includes holding the aluminum alloy powder at 120°C for 2 hours, and both the drying treatment and cooling treatment after the drying treatment are performed in an argon protective atmosphere. It should be noted that, after the aluminum alloy powder is subjected to the drying treatment and the cooling treatment, particle-size sieving needs to be performed, so that the aluminum alloy powder has a particle size of 20 µm to 180 µm.

The aluminum alloy powder provided in Comparative Example 1 is subjected to additive manufacturing by a selective laser melting method to obtain an aluminum alloy part, and the aluminum alloy part is subjected to heat treatment. A specific process of the heat treatment includes holding the aluminum alloy part at 150°C for 8 hours and then cooling the aluminum alloy part in air.

In some examples, the additive manufacturing process using the aluminum alloy powder provided in Comparative Example 1 may be completed using additive manufacturing equipment, such as BLT-S310, BLT-S320, BLT-S400 and BLT-S600.

### Comparative Example 2

Ti and Zr in Comparative Example 1 are replaced with Zr, and in percentages by mass, Zr: 0.2%, 0.4% or 0.6%.

The particle size of 20 µm to 180 µm of the aluminum alloy powder in Comparative Example 1 is adjusted to 20 µm to 63 µm.

The aluminum alloy powder in Comparative Example 2 is subjected to additive manufacturing by a selective laser melting method to obtain an aluminum alloy part, and the aluminum alloy part is subjected to heat treatment. A specific process of the heat treatment includes holding the aluminum alloy part at 180°C for 12 hours and then cooling the aluminum alloy part in air.

Except as otherwise described, the remaining technical features are the same as those in Comparative Example 1.

### Comparative Example 3

Ti and Zr in Comparative Example 1 are replaced with Ti, and in percentages by mass, Ti: 0.2%, 0.4% or 0.6%.

The particle size of 20 µm to 180 µm of the aluminum alloy powder in Comparative Example 1 is adjusted to 20 µm to 63 µm.

The aluminum alloy powder in Comparative Example 3 is subjected to additive manufacturing by a selective laser melting method to obtain an aluminum alloy part, and the aluminum alloy part is subjected to heat treatment. A specific process of the heat treatment includes holding the aluminum alloy part at 160°C for 10 hours and then cooling the aluminum alloy part in air.

Except as otherwise described, the remaining technical features are the same as those in Comparative Example 1.

Specimens of the above as-built aluminum alloy parts obtained by additive manufacturing in Comparative Examples 1 to 3 are observed by an optical microscope, and the metallographic microstructures are as shown in FIG. 5 and FIG. 6. FIG. 5 is an optical micrograph of metallographic microstructures of the as-built aluminum alloy parts obtained by additive manufacturing in Comparative Examples 1 to 3 at 100× magnification. FIG. 6 is an optical micrograph of metallographic microstructures of the as-built aluminum alloy parts obtained by additive manufacturing in Comparative Examples 1 to 3 at 200× magnification. It can be seen from FIG. 5 and FIG. 6 that hot cracks still exist in the metallographic microstructures of the aluminum alloy parts obtained by additive manufacturing in Comparative Examples 1 to 3, but the hot cracks are reduced to varying degrees in both length and width. This indicates that, when the content of Ti or Zr added to the existing 6XXX-series aluminum alloy powder is low, or the total content of Ti and Zr is low, the hot cracks in the aluminum alloy parts obtained by additive manufacturing can be reduced, but it is difficult to completely eliminate the hot cracks in the aluminum alloy parts.

### Comparative Example 4

This comparative example provides an aluminum alloy powder for additive manufacturing. The aluminum alloy powder is obtained by adding Ti and Zr to an existing 6XXX-series aluminum alloy powder. Specifically, in percentages by mass, components and contents of the aluminum alloy powder provided in Comparative Example 4 are as follows: Si: 0.1%, 0.6%, 0.7%, 0.8% or 2.0%; Fe: 0.1%, 0.6%, 0.7%, 0.8% or 1.0%; Cu: 0.1%, 0.2%, 0.3%, 0.4% or 1.0%; Mn: 0.01%, 0.1%, 0.15%, 0.2%, 0.7% or 1.5%; Mg: 0.1%, 0.8%, 1.0%, 1.2% or 1.5%; Cr: 0.01%, 0.2%, 0.25%, 0.3% or 0.5%; Zn: 0.1%, 0.2%, 0.25%, 0.3% or 0.5%; Ti: 1.5%, 1.8% or 2.0%; Zr: 1.7%, 1.8% or 2.0%; O: 0.027% or 0.035%; N: 0.001% or 0.003%; and the balance is Al and inevitable impurities.

In a specific implementation process, after the metal raw materials in the set ratio are sufficiently and uniformly melted, the aluminum alloy powder for additive manufacturing provided in Comparative Example 4 is prepared by a nitrogen gas atomization method. The aluminum alloy powder provided in Comparative Example 4 has a sphericity of 0.87, and the hollow-powder ratio of the aluminum alloy powder is 0.45%.

For Comparative Example 4 described above, the aluminum alloy powder provided in Comparative Example 4 needs to be stored in a vacuum-sealed manner, and be subjected to drying treatment before additive manufacturing. The drying treatment includes holding the aluminum alloy powder at 120°C for 2 hours, and both the drying treatment and cooling treatment after the drying treatment are performed in an argon protective atmosphere. It should be noted that, after the aluminum alloy powder is subjected to the drying treatment and the cooling treatment, particle-size sieving needs to be performed, so that the aluminum alloy powder has a particle size of 20 µm to 180 µm.

The aluminum alloy powder provided in Comparative Example 4 is subjected to additive manufacturing by a selective laser melting method to obtain an aluminum alloy part, and the aluminum alloy part is subjected to heat treatment. A specific process of the heat treatment includes holding the aluminum alloy part at 150°C for 8 hours and then cooling the aluminum alloy part in air.

In some examples, the additive manufacturing process using the aluminum alloy powder provided in Comparative Example 4 may be completed using additive manufacturing equipment, such as BLT-S310, BLT-S320, BLT-S400 and BLT-S600.

### Comparative Example 5

Ti and Zr in Comparative Example 4 are replaced with Zr, and in percentages by mass, Zr: 3.2%, 3.6% or 4.0%.

The particle size of 20 µm to 180 µm of the aluminum alloy powder in Comparative Example 4 is adjusted to 20 µm to 63 µm.

The aluminum alloy powder described in Comparative Example 5 is subjected to additive manufacturing by a selective laser melting method to obtain an aluminum alloy part, and the aluminum alloy part is subjected to heat treatment. A specific process of the heat treatment includes holding the aluminum alloy part at 180°C for 12 hours and then cooling the aluminum alloy part in air.

Except as otherwise described, the remaining technical features are the same as those in Comparative Example 4.

### Comparative Example 6

Ti and Zr in Comparative Example 4 are replaced with Ti, and in percentages by mass, Ti: 3.2%, 3.6% or 4.0%.

The particle size of 20 µm to 180 µm of the aluminum alloy powder in Comparative Example 4 is adjusted to 20 µm to 63 µm.

The aluminum alloy powder described in Comparative Example 6 is subjected to additive manufacturing by a selective laser melting method to obtain an aluminum alloy part, and the aluminum alloy part is subjected to heat treatment. A specific process of the heat treatment includes holding the aluminum alloy part at 160°C for 10 hours and then cooling the aluminum alloy part in air.

Except as otherwise described, the remaining technical features are the same as those in Comparative Example 4.

Mechanical property tests are performed on transverse specimens corresponding to the heat-treated aluminum alloy parts in Comparative Examples 4 to 6. The mechanical properties of the transverse specimens are used to characterize the mechanical properties of the heat-treated aluminum alloy parts. When the heat-treated aluminum alloy part has a lower limit of tensile strength of 375 MPa, a median of tensile strength of 382 MPa, and an upper limit of tensile strength of 388 MPa, the remaining mechanical property parameters of the heat-treated aluminum alloy part are shown in Table 3.

**Table 3**

| Mechanical property test temperature | Tensile strength Rm (MPa) | Yield strength Rp0.2 (MPa) | Elongation after fracture A (%) | Reduction of area after fracture Z (%) |
|---|---|---|---|---|
| Room temperature | 375 | 351 | 15.5 | 25 |
| Room temperature | 382 | 353 | 15 | 35 |
| Room temperature | 388 | 355 | 14 | 30 |

When the content of Ti or Zr added to the existing 6XXX-series aluminum alloy powder is greater than 3.0%, or the total content of Ti and Zr is greater than 3.0%, although hot cracks in aluminum alloy parts obtained by additive manufacturing can be eliminated, as shown in Table 3, the degrees of improvement in tensile strength and yield strength of the aluminum alloy parts are not significant, and the elongation after fracture is lower than the elongation after fracture of the aluminum alloy parts in Examples 1 to 6. In addition, an excessively high content of Ti or Zr, or an excessively high total content of Ti and Zr causes Ti and/or Zr to become one of main components in the aluminum alloy powder, thereby changing properties of the aluminum alloy powder and increasing manufacturing cost.

It can be seen from Examples 1 to 6 and Comparative Examples 1 to 6 described above that, by adding Ti or Zr in a content of 0.8% to 3.0%, or adding Ti and Zr in a total content of 0.8% to 3.0%, to the existing 6XXX-series aluminum alloy powder, the tensile strength and yield strength of the aluminum alloy part obtained by additive manufacturing are improved, and the elongation after fracture of the aluminum alloy part obtained by additive manufacturing is also improved, so that the aluminum alloy part obtained by additive manufacturing can be applied to technical fields such as automobiles and aerospace. In addition, the aluminum alloy powder provided in the embodiments of the present application can also eliminate cracking that is likely to occur in an aluminum alloy part during additive manufacturing when an existing 6XXX-series aluminum alloy powder is used.

The exemplary embodiments of the present application described in detail above are merely illustrative rather than limiting. Those skilled in the art should understand that various modifications and combinations may be made to these embodiments or their features without departing from the principles and spirit of the present application, and such modifications should fall within the scope of the present application.

### INDUSTRIAL APPLICABILITY

The embodiments of the present application provide an aluminum alloy powder for additive manufacturing, a preparation method thereof, and an aluminum alloy part. The aluminum alloy powder is obtained by adding Ti and/or Zr to an existing 6XXX-series aluminum alloy powder, so that, during additive manufacturing, Ti and/or Zr forms an Al₃Ti phase and/or an Al₃Zr phase with Al. During solidification, the Al₃Ti phase and/or the Al₃Zr phase can serve as heterogeneous nucleation sites of α-Al to refine grains, so that coarse columnar crystals inside a molten pool are transformed into fine equiaxed crystals, thereby eliminating hot cracks generated during solidification and solving the problem that the existing 6XXX-series aluminum alloy powder is prone to hot cracking during an additive manufacturing process.

## Claims

1. An aluminum alloy powder for additive manufacturing, wherein, in percentages by mass, the aluminum alloy powder comprises:
Si: 0.1% to 2.0%;
Fe: 0.1% to 1.0%;
Cu: 0.1% to 1.0%;
Mn: 0.01% to 1.5%;
Mg: 0.1% to 1.5%;
Cr: 0.01% to 0.5%;
Zn: 0.1% to 0.5%;
a first component: 0.8% to 3.0%, wherein the first component is Ti, Zr, or a combination of Ti and Zr;
a second component: less than 0.05%, wherein the second component is a combination of O and N; and
the balance being Al and inevitable impurities.

2. The aluminum alloy powder according to claim 1, wherein the first component is greater than or equal to 0.8% and less than 2.0%.

3. The aluminum alloy powder according to claim 1, wherein the first component is greater than 2.0% and less than or equal to 3.0%.

4. The aluminum alloy powder according to any one of claims 1 to 3, wherein, in percentages by mass, the aluminum alloy powder comprises at least one of the following:
Si: 0.6% to 0.8%;
Fe: 0.6% to 0.8%;
Cu: 0.2% to 0.4%;
Mn: 0.1% to 0.2%;
Mg: 0.8% to 1.2%;
Cr: 0.2% to 0.3%;
Zn: 0.2% to 0.3%.

5. The aluminum alloy powder according to claim 4, wherein a particle size of the aluminum alloy powder is less than 180 µm.

6. The aluminum alloy powder according to claim 5, wherein the particle size of the aluminum alloy powder is 20 µm to 63 µm.

7. A preparation method of an aluminum alloy powder for additive manufacturing, wherein the preparation method comprises:
uniformly melting metal raw materials in a set ratio, wherein, in percentages by mass, the metal raw materials in the set ratio comprise:
Si: 0.1% to 2.0%;
Fe: 0.1% to 1.0%;
Cu: 0.1% to 1.0%;
Mn: 0.01% to 1.5%;
Mg: 0.1% to 1.5%;
Cr: 0.01% to 0.5%;
Zn: 0.1% to 0.5%;
a first component: 0.8% to 3.0%, wherein the first component is Ti, Zr, or a combination of Ti and Zr;
a second component: less than 0.05%, wherein the second component is a combination of O and N;
the balance being Al and inevitable impurities; and
preparing, based on the uniformly melted metal raw materials, an aluminum alloy powder by a gas atomization method, wherein a sphericity of the aluminum alloy powder is not less than 0.8, and a hollow-powder ratio of the aluminum alloy powder is not greater than 10%.

8. The preparation method according to claim 6, wherein the first component is greater than or equal to 0.8% and less than 2.0%.

9. The preparation method according to claim 6, wherein the first component is greater than 2.0% and less than or equal to 3.0%.

10. The preparation method according to any one of claims 7 to 9, wherein, in percentages by mass, the metal raw materials in the set ratio comprise at least one of the following:
Si: 0.6% to 0.8%;
Fe: 0.6% to 0.8%;
Cu: 0.2% to 0.4%;
Mn: 0.1% to 0.2%;
Mg: 0.8% to 1.2%;
Cr: 0.2% to 0.3%;
Zn: 0.2% to 0.3%.

11. An aluminum alloy part, wherein the aluminum alloy part is obtained by additive manufacturing from the aluminum alloy powder according to any one of claims 1 to 6.

12. The aluminum alloy part according to claim 11, wherein after heat treatment, the aluminum alloy part has a tensile strength of not less than 316 MPa, a yield strength of not less than 293 MPa, and an elongation after fracture of not less than 17%, wherein a heat treatment process for the aluminum alloy part includes holding the aluminum alloy part at 150°C to 180°C for 8 hours to 12 hours and then cooling the aluminum alloy part in air.

13. The aluminum alloy part according to claim 12, wherein after heat treatment, the aluminum alloy part has a tensile strength of 316 MPa to 370 MPa, a yield strength of 293 MPa to 347 MPa, and an elongation after fracture of 17% to 22%.
